# FASCICULE DE BREVET EUROPEEN

(11) **EP 3 050 176 B1**
(45) Date de publication et mention de la délivrance du brevet: **25.11.2020**
(21) Numéro de dépôt: 14796172.6
(22) Date de dépôt: 18.09.2014
(51) Int. Cl.: B60L 53/16

(54) **DISPOSITIF ELECTRIQUE COMPORTANT UNE PRISE ELECTRIQUE COMPORTANT UN AIMANT ET DES MOYENS DE COUPURE, ET ENSEMBLE ELECTRIQUE ASSOCIE**
ELEKTRISCHE VORRICHTUNG MIT EINER STECKDOSE MIT EINEM MAGNETEN UND EINER ABSCHALTUNG, UND ELEKTRISCHE BAUGRUPPE DAMIT
ELECTRICAL DEVICE COMPRISING AN ELECTRICAL OUTLET COMPRISING A MAGNET AND CUT-OFF MEANS, AND ASSOCIATED ELECTRICAL ASSEMBLY

(30) Priorité: 26.09.2013 FR 1359281
(43) Date de publication de la demande: 03.08.2016
(73) Titulaire: Legrand France, 87000 Limoges (FR); Legrand SNC, 87000 Limoges (FR)
(72) Inventeur: CHAUMENY, Jean-Luc, 87590 Saint Just Le Martel (FR); VALADAS, Vincent, F-87240 Ambazac (FR)
(74) Mandataire: Jacobacci Coralis Harle
(86) Numéro de dépôt international: PCT/FR2014/052325
(87) Numéro de publication internationale: WO 2015/052395

(56) Documents cités:
- WO-A1-2011/102777
- WO-A1-2013/001174
- FR-A1- 2 979 490
- US-A1- 2011 231 044
- US-A1- 2012 021 619

## Description

### DOMAINE TECHNIQUE AUQUEL SE RAPPORTE L'INVENTION

La présente invention concerne de manière générale le domaine des dispositifs électriques comportant des prises électriques.

Elle concerne plus particulièrement un dispositif électrique comportant une prise électrique adaptée à délivrer un signal électrique qui présente une intensité maximale déterminée, comportant un aimant conçu pour générer un champ magnétique destiné à une fiche électrique et représentatif de ladite intensité maximale dudit signal électrique.

Elle concerne également un ensemble électrique comportant un dispositif électrique comportant une telle prise électrique.

### ARRIERE-PLAN TECHNOLOGIQUE

On connaît notamment du document FR2977389, appartenant aux demanderesses, une fiche électrique telle que décrite en introduction.

Cette prise électrique génère un signal de communication, par exemple un champ magnétique, représentatif de ladite intensité maximale dudit signal électrique. Ce signal de communication est transmis à la fiche électrique enfichée dans la prise, et est converti par cette fiche électrique en un signal électrique de contrôle de l'appareil électrique relié à la fiche électrique.

Ce signal électrique de contrôle est transmis à l'appareil électrique auquel la fiche électrique est connectée électriquement par un câble d'alimentation.

Ce signal électrique de contrôle fournit audit appareil électrique une indication concernant l'intensité maximale du courant électrique que la prise électrique est adaptée à délivrer en permanence sans être endommagée.

Ceci est particulièrement avantageux dans le cas où l'appareil électrique est la batterie électrique d'un véhicule automobile.

La charge de la batterie d'un véhicule automobile nécessite en effet le passage dans cette batterie d'un courant typiquement égal à 14 Ampères pendant plusieurs heures.

Pour des questions pratiques, il est par ailleurs avantageux pour l'utilisateur de connecter la fiche électrique reliée à la batterie de son véhicule automobile, sur une prise électrique domestique standard normalisée à 16 Ampères.

Ce type de prise électrique présente théoriquement des caractéristiques intrinsèques lui permettant de délivrer un courant d'intensité inférieure ou égale à 16 Ampères pendant une durée normalisée.

Le signal de contrôle généré par la fiche électrique décrite dans le document FR2977389 peut être reçu par un dispositif de gestion de la charge de la batterie disposé dans le véhicule. Ce dispositif de gestion peut alors ajuster les paramètres de la charge de la batterie, notamment le temps de charge et l'intensité du courant prélevé en fonction du signal de contrôle reçu.

Par exemple, lorsque la fiche électrique reçoit le signal de communication émis par la prise électrique, le dispositif de gestion de la charge tire 14 Ampères pendant 8 heures pour charger la batterie du véhicule vide.

Lorsque la fiche électrique ne reçoit pas le signal de communication émis par la prise électrique, le dispositif de gestion de la charge tire 8 Ampères pendant un temps plus long pour charger la batterie du véhicule vide.

La prise électrique décrite dans le document FR2977389 émet en permanence le champ magnétique formant signal de communication. Celui-ci est donc transmis dans tous les cas à la fiche électrique connectée à cette prise électrique.

Ceci présente un inconvénient dans le cas où la prise électrique délivre un courant provenant d'une installation électrique adaptée, pour les raisons structurelles ou des raisons de tarification, à délivrer un ampérage global maximal à un ensemble d'appareillages électriques.

En effet, la charge de la batterie du véhicule par un courant de 14 Ampères peut, dans certaines circonstances, engendrer un dépassement de cet ampérage global maximal.

Cela serait par exemple le cas dans une installation domestique, en hiver, au moment où les chauffages électriques de l'habitation fonctionnent en parallèle de la charge de la batterie du véhicule. US 2012/021619 A1 divulgue une prise comportant des électroaimants dont le champ magnétique est commandable pour communiquer et interagir avec une fiche.

### OBJET DE L'INVENTION

Afin de remédier à l'inconvénient précité de l'état de la technique, la présente invention propose un dispositif électrique comportant une prise électrique dans laquelle il est possible de transmettre ou non le signal de communication à la fiche électrique.

Plus particulièrement, on propose selon l'invention un dispositif électrique comportant une prise électrique telle que décrite en introduction, comportant des moyens de coupure pour empêcher la transmission du champ magnétique à la fiche électrique.

D'autres caractéristiques non limitatives et avantageuses de la prise électrique comprise dans le dispositif électrique conforme à l'invention sont les suivantes :
- ledit aimant est un aimant permanent ou un électroaimant ;
- ledit aimant est logé à l'intérieur d'un boîtier de la prise électrique, derrière une plaque enjoliveur fermant à l'avant ce boîtier ;
- ledit aimant est un électroaimant et lesdits moyens de coupure comprennent des moyens de coupure du courant électrique circulant dans ledit électroaimant ;
- lesdits moyens de coupure comprennent des moyens de déplacement dudit aimant, depuis une position active dans laquelle le champ magnétique émis par cet aimant se propage au moins jusqu'à la face avant de ladite plaque enjoliveur, vers une position désactivée, dans laquelle ledit champ magnétique en face avant de la plaque enjoliveur présente une intensité insuffisante pour la transmission du champ magnétique à la fiche électrique enfichée dans la prise;
- lesdits moyens de coupure comprennent des moyens de déviation du champ magnétique émis par ledit aimant, adapté à être déplacés depuis une position de retrait dans laquelle le champ magnétique émis par l'aimant se propage au moins jusqu'à la face avant de ladite plaque enjoliveur, vers une position d'interaction, dans laquelle ledit champ magnétique est dévié par lesdits moyens de déviation de manière à présenter, en face avant de la plaque enjoliveur, une intensité insuffisante pour la transmission du champ magnétique à la fiche électrique enfichée dans la prise.

L'invention concerne un dispositif électrique comportant une prise électrique telle que décrite précédemment, ainsi que des moyens de commande adaptés à commander les moyens de coupure de la prise électrique de manière à empêcher la transmission du champ magnétique.

Selon l'invention, lesdits moyens de commande sont adaptés à déterminer une valeur d'une grandeur relative au fonctionnement d'une installation électrique comprenant ledit dispositif électrique, et à commander lesdits moyens de coupure en fonction de cette valeur.

Selon l'invention, ladite valeur déterminée par les moyens de commande est la valeur de la consommation électrique globale instantanée de ladite installation électrique.

L'invention concerne enfin un ensemble électrique comportant un dispositif électrique comportant une prise électrique telle que décrite précédemment et une fiche électrique complémentaire comprenant des moyens de lecture adaptés à recevoir ledit champ magnétique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en coupe selon le plan P1 de la figure 3, d'un ensemble électrique comportant un premier mode de réalisation d'une prise électrique comprise dans un dispositif électrique conforme à l'invention, dans laquelle est enfichée une fiche électrique complémentaire,
- la figure 2 est une vue de détail de la zone A de la figure 1,
- la figure 3 est une vue en perspective de l'ensemble électrique de la figure 1,
- la figure 4 est un diagramme schématique d'une installation électrique comportant un dispositif électrique selon l'invention avec la prise électrique de la figure 1,
- la figure 5 est une vue schématique en perspective, avec un arraché, d'un second mode de réalisation de la prise électrique comprise dans un dispositif électrique selon l'invention, dans lequel les moyens de coupure sont dans une position d'interaction,
- la figure 6 est une vue schématique en coupe selon le plan P2 de la figure 5,
- la figure 7 est une vue de détail de la zone B de la figure 6,
- la figure 8 est une vue schématique en perspective, avec un arraché, de la prise électrique de la figure 5, dans lequel les moyens de coupure sont dans une position de retrait,
- la figure 9 est une vue schématique en coupe selon le plan P3 de la figure 8,
- la figure 10 est une vue de détail de la zone C de la figure 9,
- la figure 11 est une vue schématique partielle en perspective d'un troisième mode de réalisation de la prise électrique comprise dans un dispositif électrique selon l'invention, dans lequel les moyens d'identification sont dans une position désactivée,
- la figure 12 est une vue schématique partielle en coupe selon le plan P4 de la figure 11,
- la figure 13 est une vue schématique partielle en perspective de la prise électrique de la figure 11, dans laquelle les moyens d'identification sont dans une position active,
- la figure 14 est une vue schématique partielle en coupe selon le plan P5 de la figure 13,
- la figure 15 est une vue schématique partielle en perspective d'un quatrième mode de réalisation de la prise électrique comprise dans un dispositif électrique selon l'invention, dans lequel les moyens d'identification sont dans une position désactivée,
- la figure 16 est une vue schématique partielle en coupe selon le plan P6 de la figure 15,
- la figure 17 est une vue schématique partielle en perspective de la prise électrique de la figure 15, dans laquelle les moyens d'identification sont dans une position active,
- la figure 18 est une vue schématique partielle en coupe selon le plan P7 de la figure 17.

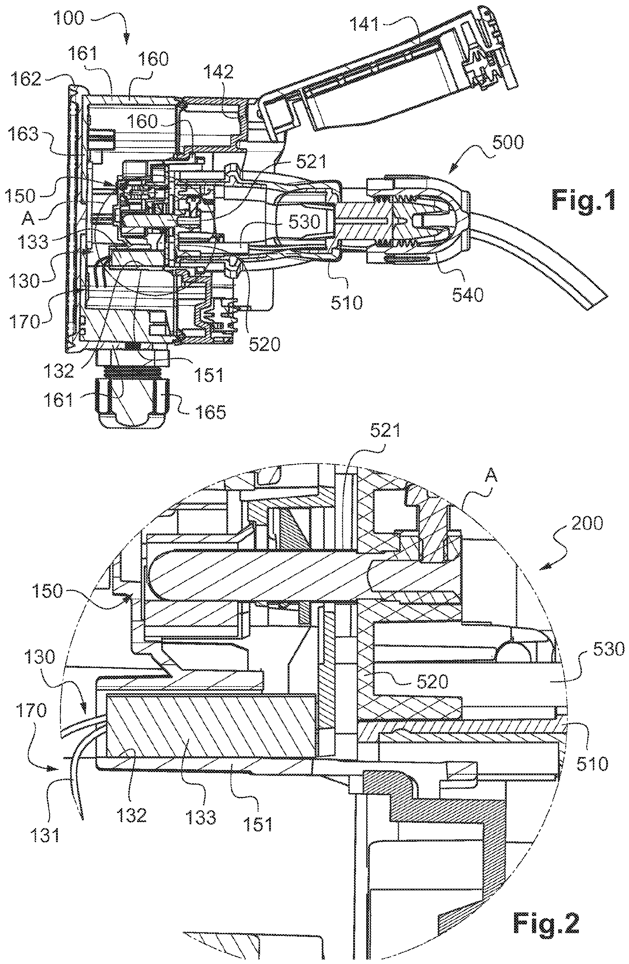

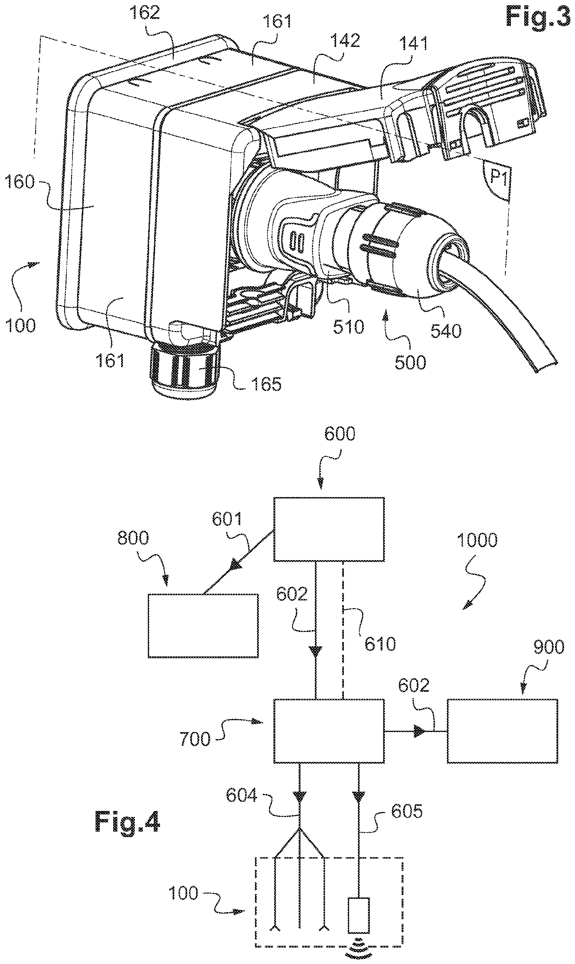

On notera que le plan de coupe P1 n'est pas un plan médian de l'ensemble comportant la fiche électrique et la prise électrique des figures 1 et 3. Ce plan de coupe P1 est légèrement décalé par rapport au plan médian de cet ensemble.

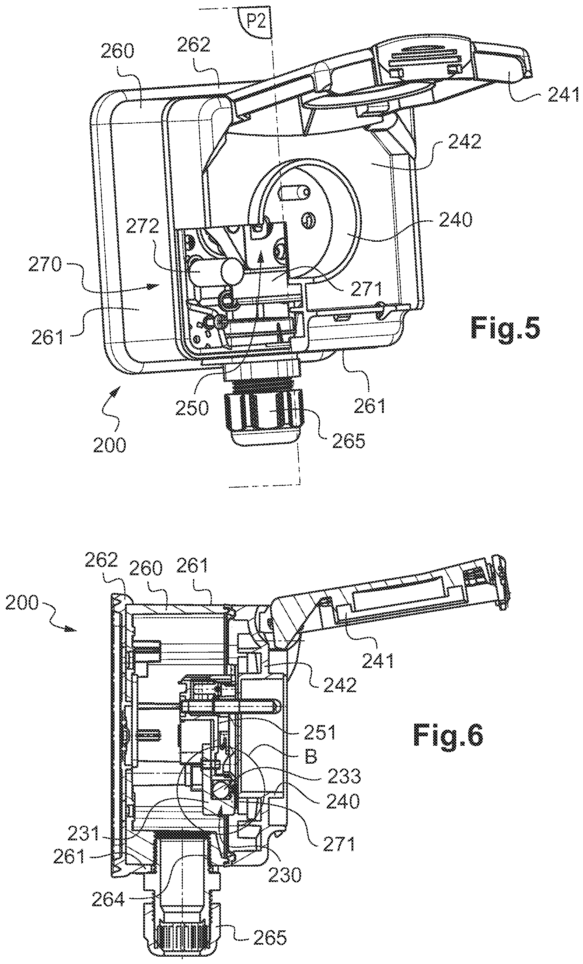

De même, les plans de coupe P2, P3, P4 et P5 des figures 5, 8, 11, 13, 15 et 17 ne sont pas des plans médians de la prise électrique correspondante, mais des plans légèrement décalés par rapport à un tel plan médian.

On a représenté plus particulièrement sur les figures 1 à 3, 5, 6, 8, 9 et 11 à 18 plusieurs modes de réalisation de la prise électrique 100 ; 200 ; 300 ; 400 comprise dans un dispositif électrique selon l'invention.

La prise électrique 100 ; 200 ; 300 ; 400 comprise dans un dispositif électrique selon l'invention est adaptée à délivrer, à une fiche électrique complémentaire connectée sur elle, un signal électrique présentant des caractéristiques prédéterminées, qui dépendent des caractéristiques intrinsèques physiques de la prise ainsi que de la source d'alimentation 600 de la prise électrique.

Cette source d'alimentation 600 est représentée schématiquement sur la figure 4. Un exemple de fiche électrique complémentaire 500 est représenté sur les figures 1 à 3. Le signal électrique délivré par la prise électrique 100 ; 200; 300 ; 400 présente notamment une intensité maximale qui dépend de caractéristiques intrinsèques de la prise électrique notamment des caractéristiques physiques qui déterminent l'échauffement et la tenue à la chaleur de la prise électrique lors de son fonctionnement.

Il s'agit par exemple de la résistance interne de la prise électrique, de sa géométrie et des matériaux isolants et conducteurs utilisés pour la fabriquer.

On entend ici par intensité maximale l'intensité maximale du signal électrique que peut délivrer la prise électrique 100 ; 200 ; 300 ; 400 pendant une durée déterminée sans être endommagée.

Cette durée déterminée est par exemple supérieure à 4 heures.

La prise électrique 100; 200; 300; 400 comporte des moyens d'identification 130; 230; 330; 430 adaptés à générer un signal de communication représentatif de ladite intensité maximale dudit signal électrique (figures 1 à 3, 5, 6, 8, 9 et 11 à 18).

Comme expliqué plus en détails plus loin, la fiche électrique 500 complémentaire est adaptée à recevoir ce signal de communication et à le convertir en un signal de contrôle, qui est donc déterminé en fonction de l'intensité maximale du courant que la prise électrique est adaptée à délivrer compte tenu des caractéristiques intrinsèques de cette prise.

Comme le montrent plus particulièrement les figures 1 et 2, la fiche électrique 500 comporte à cet effet des moyens de lecture 530 adaptés à recevoir le signal de communication de la prise électrique 100; 200; 300; 400 et à générer en conséquence le signal de contrôle.

Ainsi, la prise électrique 100; 200; 300; 400 comprise dans un dispositif électrique selon l'invention est adaptée à communiquer avec la fiche électrique 500 branchée sur elle, de manière à ce que la fiche électrique génère le signal de contrôle indiquant quelle est l'intensité maximale du courant délivré par ladite prise électrique, sans que la prise électrique soit endommagée. La fiche électrique 500 transmet ce signal de contrôle à l'appareil électrique relié à la fiche électrique.

L'appareil électrique peut alors être programmé pour adapter son fonctionnement en fonction du signal de contrôle transmis par la prise électrique.

La prise électrique comprise dans un dispositif électrique selon l'invention présente plus particulièrement des caractéristiques intrinsèques adaptées au passage d'un courant de 16 Ampères pendant une durée déterminée.

Cette durée déterminée est par exemple supérieure ou égale à 4 heures.

L'appareil électrique relié à la fiche électrique comprise dans un ensemble électrique selon l'invention est par exemple une batterie d'un véhicule automobile électrique.

Il s'agit en particulier d'une prise électrique dédiée au chargement d'accumulateurs d'une batterie d'un véhicule automobile électrique. La prise électrique comprise dans un dispositif électrique selon l'invention est notamment adaptée à délivrer un courant de charge égal à 14 Ampères.

Dans cet exemple, le signal de communication indique alors à la fiche électrique 500 branchée sur la prise électrique 100 ; 200 ; 300 ; 400 que cette prise électrique présente de manière certaine les caractéristiques intrinsèques nécessaires pour la charge de la batterie du véhicule automobile avec ce courant de charge de 14 Ampères.

En d'autres termes, la prise électrique 100 ; 200 ; 300 ; 400 communique avec la fiche électrique 500 pour que cette fiche électrique transmette au véhicule automobile électrique le signal de contrôle indiquant la valeur d'intensité maximale du courant que la prise électrique peut délivrer sans être endommagée.

Le véhicule électrique peut alors ajuster la valeur de l'intensité de courant que la batterie de ce véhicule peut tirer de la prise électrique 100 ; 200 ; 300 ; 400 pour le chargement des accumulateurs afin de ne pas dépasser cette valeur de courant maximale.

En pratique, lorsque la fiche électrique 500 de la batterie du véhicule électrique transmet un signal de contrôle indiquant que la prise électrique 100 ; 200 ; 300 ; 400 est adaptée à délivrer un courant de 16 Ampères, la charge de la batterie s'effectue dans des conditions optimisées et la batterie du véhicule tire un courant de charge de 14 Ampères pendant la durée habituelle de chargement. Cette durée est par exemple égale à environ 8 heures pour une batterie initialement vide.

Si la fiche électrique 500 reliant la batterie du véhicule électrique à la prise électrique 100 ; 200 ; 300 ; 400 transmet un signal de contrôle indiquant que la prise électrique n'est pas adaptée de manière certaine à délivrer un courant de 16 Ampères, la batterie du véhicule tire un courant inférieur à 16 Ampères, par exemple égal à 8 Ampères, pendant une durée supérieure à la durée habituelle de chargement, de manière à charger les accumulateurs de la batterie, sans endommager la prise électrique.

Le véhicule peut ainsi optimiser son temps de charge en fonction de la prise électrique sur laquelle il est connecté, sans mettre en danger l'installation.

De manière remarquable, la prise électrique 100 ; 200 ; 300 ; 400 comprise dans un dispositif électrique selon l'invention comporte en outre des moyens de coupure 170 ; 270 ; 370 ; 470 pour empêcher la transmission du signal de communication à la fiche électrique 500.

Ainsi, grâce à la prise électrique comprise dans un dispositif électrique selon l'invention, il est possible d'empêcher la transmission du signal de communication, même si la prise électrique est adaptée à délivrer un courant de 16 Ampères.

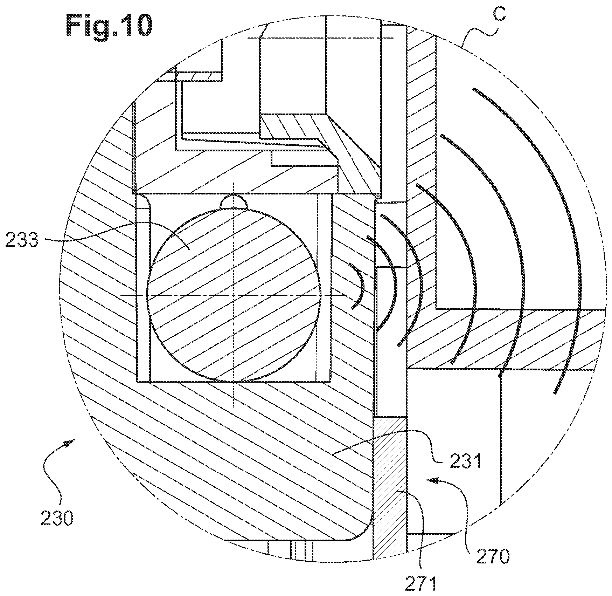

Plus précisément ici, comme expliqué plus en détails ultérieurement, lesdits moyens d'identification 130 ; 230 ; 330 ; 430 de la prise électrique 100 ; 200 ; 300 ; 400 comportent un aimant 133 ; 233 ; 333 ; 433 (figures 2, 7, 10, 12, 14, 16, 18).

Cet aimant 133; 233; 333; 433 produit un champ magnétique qui constitue le signal de communication émis par la prise électrique 100.

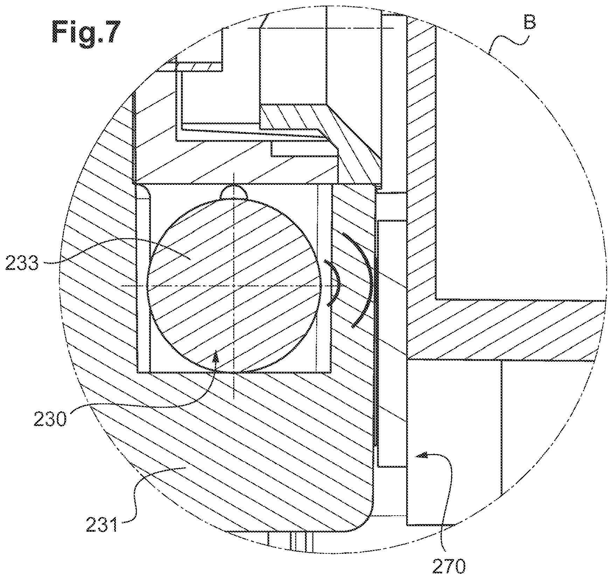

Ce champ magnétique est représenté schématiquement sur les figures 7, 9, 10, 12, 14, 16 et 18 par des arcs de cercle concentriques.

Les moyens de lecture 530 de la fiche électrique 500 comportent alors un circuit électrique secondaire, distinct du circuit électrique relié aux broches de connexion de cette fiche, qui comprend un interrupteur à lame souples. Cet interrupteur à lames souples est adapté à se fermer en présence du champ magnétique généré par les moyens d'identification de la prise électrique. La fermeture du circuit électrique secondaire de la fiche électrique 500 génère donc le signal de contrôle électrique qui est transmis à la batterie du véhicule électrique.

De manière générale, dans les différents modes de réalisation de la prise électrique 100 ; 200 ; 300 ; 400 représentés sur les figures, celle-ci comporte un mécanisme d'appareillage 150 ; 250 ; 350 ; 450 (figures 1, 2, 5, 6, 8, 9 et 11 à 18) et un enjoliveur 140; 240; 340; 440 rapporté en face avant du mécanisme d'appareillage 150 ; 250 ; 350 ; 450. Cet enjoliveur 140 ; 240 ; 340 ; 440 forme le puits de réception de la prise électrique.

Dans les deux premiers modes de réalisation représentés sur les figures 1 à 10, l'enjoliveur 140 ; 240 émerge d'une face avant d'un couvercle enjoliveur 142 ; 242 (figures 1, 3, 5, 6, 8 et 9).

Le couvercle enjoliveur 142 ; 242 comporte en outre un volet 141 ; 241 monté à pivotement en face avant du couvercle enjoliveur 142 ; 242, pour fermer l'accès au puits de réception de la prise électrique 100 ; 200 (figures 1, 3, 5, 6, 8 et 9).

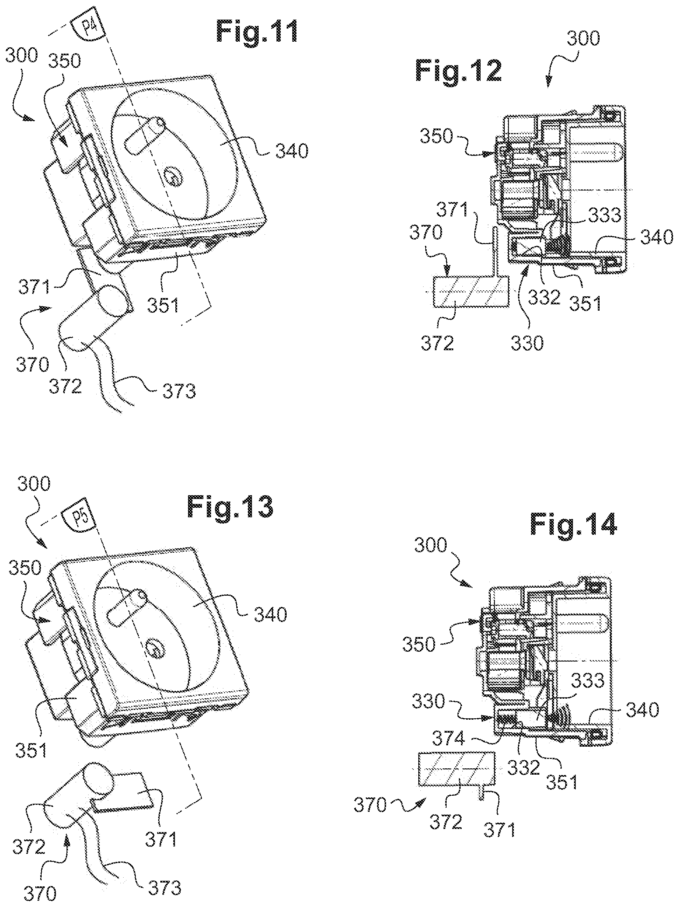

La prise électrique 100 ; 200 ; 300 ; 400 est fermée en face arrière par un boîtier 160 ; 260 représenté sur les figures 1, 3, 5, 6, 8 et 9. Il n'est pas représenté sur les figures 11 à 18.

La prise électrique 100 ; 200 ; 300 ; 400 est ici destinée à être montée en saillie sur une paroi de réception. En variante, on peut également envisager que la prise électrique soit montée encastrée dans la paroi de réception.

Le mécanisme d'appareillage 150, 250, 350, 450 comporte un socle 151 ; 251 ; 351 ; 451 (figures 1, 2, 6, 9 et 11 à 18) en matière isolante monté dans le boîtier par exemple par l'intermédiaire de pattes formant chacune un puits de réception adapté à recevoir un plot de montage complémentaire prévu dans le boîtier (non visible sur les figures).

Le boîtier 160 ; 260 comporte un fond 163 ; 263 entouré de quatre parois latérales 161 ; 261 s'étendant perpendiculairement à ce fond 163 ; 263 (figures 1, 3, 5, 6, 8 et 9). Il est fermé en face avant par le couvercle enjoliveur 142 ; 242.

Le fond 163 ; 263 du boîtier 160 ; 260 est entouré d'un rebord souple 162 ; 262 jouant le rôle de joint d'étanchéité entre la prise électrique 100 et la paroi de réception sur laquelle elle est montée en saillie.

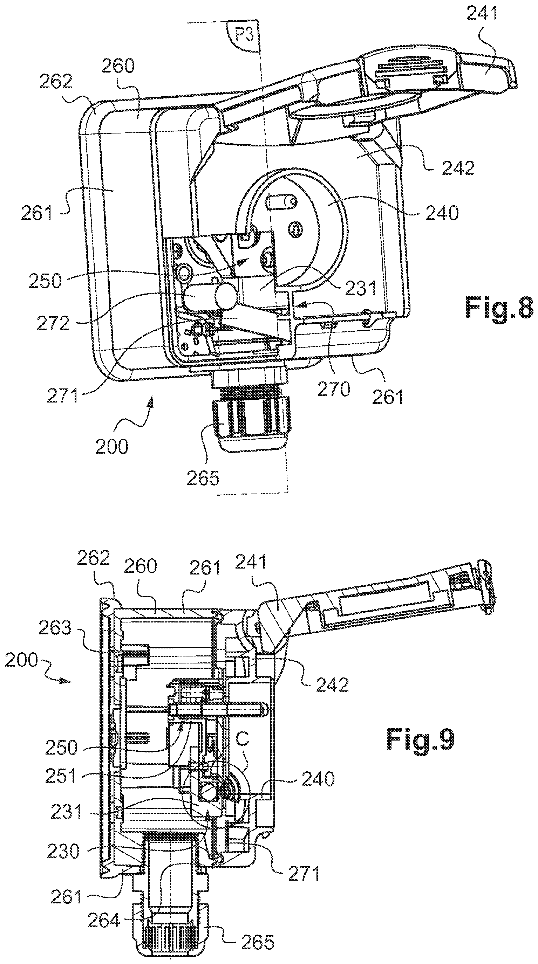

L'une des faces latérales 161 ; 261 du boîtier 160 ; 260 comporte une ouverture circulaire 264 (voir figures 6 et 9), dans laquelle est inséré un presse-étoupe 165; 265 par lequel les câbles électriques (non représentés) d'alimentation de la prise électrique 100 ; 200 pénètrent de manière étanche dans le boîtier 160 ; 260.

Le socle 151 ; 251, 351, 451 du mécanisme d'appareillage 150 ; 250; 350 ; 450 enferme de manière classique trois bornes adaptées à être connectées électriquement auxdits câbles d'alimentation de phase, de neutre et de terre de la prise électrique 100 ; 200 ; 300 ; 400.

Une broche connectée à la borne de terre fait saillie dans le puits de réception de la prise électrique.

Lorsque les raccordements des bornes électriques de la prise électrique à la source d'alimentation 600 de l'installation électrique 1000 dont fait partie la prise sont effectués, la prise électrique 100 délivre en permanence ledit signal électrique.

Selon le premier mode de réalisation, représenté sur les figures 1 à 4, l'aimant 133, constituant lesdits moyens d'identification 130 de la prise électrique 100, est un électroaimant.

Il s'agit ainsi par exemple d'une bobine électromagnétique alimentée par un premier circuit électrique indépendant 131 distinct du circuit électrique reliant les bornes de la prise électrique 100 à la source d'alimentation électrique 600 (voir figure 2).

Cet électroaimant 133 est logé dans un logement 132 ménagé dans le socle isolant 151 du mécanisme d'appareillage 150, derrière l'enjoliveur 140.

Il est alors possible de changer le boîtier ou le couvercle enjoliveur de la prise sans avoir besoin de démonter et de remonter l'électroaimant 133 qui est logé dans le socle du mécanisme d'appareillage.

L'électroaimant 133 est de préférence placé à proximité, voire au contact de la face arrière de l'enjoliveur 140, de manière à être disposé à proximité de la fiche électrique 500 lorsque celle-ci est enfichée dans la prise électrique 100 (voir figure 1). Ainsi, le champ magnétique émis par l'électroaimant 133 logé dans la prise électrique 100 se propage jusqu'à l'interrupteur à lames souples logé dans la fiche électrique 500.

Les moyens de coupure 170 de la prise électrique 100 comprennent des moyens d'interruption du courant électrique circulant dans le premier circuit électrique indépendant 131 alimentant l'électroaimant 133 en courant électrique.

Ainsi, il est possible d'empêcher l'émission du signal de communication par la fiche électrique.

Selon le deuxième mode de réalisation, représenté sur les figures 5 à 10, l'aimant 233, constituant les moyens d'identification 230 de la prise électrique 200, est un aimant permanent.

Cet aimant 233 se présente par exemple sous la forme d'un barreau cylindrique avec une longueur de 25,4 millimètres, un diamètre de 6,35 millimètres et une force d'adhérence de 1,6 kilogrammes.

Il peut s'agir d'un aimant permanent dont la magnétisation est caractérisée par la référence N42, ce qui signifie que le taux énergétique de l'aimant 133 est de 42 MGOe (Méga Gauss Oersted) et qu'il peut être utilisé jusqu'à une température ambiante de 80 degrés Celsius.

Son revêtement est par exemple en Nickel.

L'aimant 233 est disposé à proximité d'une paroi du puits de réception de la prise électrique 200, de manière à être proche de la fiche électrique 500 lorsqu'elle est insérée dans ce puits de réception.

L'aimant 233 s'étend ici parallèlement au fond de ce puits de réception de la prise électrique 200.

L'aimant 233 est ici logé dans un support 231 se présentant sous la forme d'un berceau rapporté sur le socle 251 du mécanisme d'appareillage 250 (figures 6 et 9).

Les moyens de coupure 270 de la prise électrique 200 comprennent ici des moyens de déviation 271 du champ magnétique émis par ledit aimant 233, adaptés à être déplacés depuis une position de retrait (figures 8 à 10) dans laquelle lesdits moyens de déviation autorisent la propagation du champ magnétique émis par l'aimant 233 au moins jusqu'à la face avant dudit enjoliveur 240, vers une position d'interaction (figures 5 à 7), dans laquelle lesdits moyens de déviation dévient le champ magnétique de manière à ce que celui-ci présente, en face avant de l'enjoliveur 240, une intensité insuffisante pour la transmission du signal de communication à la fiche électrique 500 lorsque celle-ci est enfichée dans la prise électrique.

Ces moyens de déviation 271 se présentent ici sous la forme d'une plaquette réalisée dans un alliage de nickel et de fer appelé mumétal. Il s'agit par exemple d'un alliage de 80 pourcent de nickel, 15 pourcent de fer et 5 pourcent de molybdène. Cet alliage a subit un traitement thermique permettant le grossissement des grains, ce qui lui confère une très haute perméabilité magnétique.

Cela lui permet d'attirer les lignes de champs magnétiques.

Cette plaquette 271 de mumétal est solidaire d'un axe de rotation 272, qui s'étend perpendiculairement au plan de la plaquette, dans un coin de cette plaquette.

Cet axe de rotation 272 est monté à l'intérieur du boîtier 260, de telle sorte que la plaquette 271 s'étend parallèlement à l'aimant 233, entre la paroi avant du support 231 qui loge l'aimant 233 et l'enjoliveur 240.

Cet axe de rotation 272 est adapté à pivoter entre une première position dans laquelle la plaquette 271 se trouve dans sa position de retrait (figures 8 à 10) et une deuxième position dans laquelle la plaquette 271 se trouve dans sa position d'interaction (figures 5 à 7).

L'axe de rotation 272 est à cet effet relié à un moteur électrique alimenté par un deuxième circuit électrique indépendant (non représenté).

Dans la position de retrait, la plaquette 271 est décalée par rapport à l'aimant 233, et le champ magnétique émis par l'aimant 233 se propage jusqu'à la face avant de l'enjoliveur 240 sans être dévié par la plaquette 271.

Dans la position d'interaction, la plaquette 271 est interposée entre l'aimant 233 et l'enjoliveur 240 : la propagation du champ magnétique émis par l'aimant 233 jusqu'à la face avant de l'enjoliveur 240 est empêchée.

Selon les troisième et quatrième modes de réalisation de la prise électrique, représenté sur les figures 11 à 14, l'aimant 333, 433, constituant les moyens d'identification de la prise électrique 300 ; 400, est également un aimant permanent.

Cet aimant 333 ; 433 se présente sous la forme d'un barreau cylindrique. Il peut s'agir d'un aimant permanent dont la magnétisation est caractérisée par la référence N42, ce qui signifie que le taux énergétique de l'aimant 333 ; 433 est de 42 MGOe (Méga Gauss Oersted) et qu'il peut être utilisé jusqu'à une température ambiante de 80 degrés Celsius.

Son revêtement est par exemple en Nickel.

Cet aimant 333 ; 433 est logé dans un logement 332 ; 432 ménagé dans le socle 351 ; 451 du mécanisme d'appareillage et s'étend perpendiculairement au fond de ce socle. Plus précisément, l'axe longitudinal de l'aimant 333 ; 433 s'étend perpendiculairement au socle du mécanisme d'appareillage 350 ; 450.

Le logement 332 ; 432 présente une dimension longitudinale supérieure à la longueur du barreau formant l'aimant 333 ; 433.

Ainsi, l'aimant 333 ; 433 peut ainsi coulisser d'avant en arrière, et inversement, dans le logement 332 ; 432.

Les moyens de coupure 370 ; 470 comprennent alors des moyens de déplacement 370 dudit aimant 333 ; 433, depuis une position active dans laquelle le champ magnétique émis par cet aimant se propage au moins jusqu'à la face avant de l'enjoliveur 340 ; 440, vers une position désactivée, dans laquelle ledit champ magnétique en face avant de l'enjoliveur 340 ; 440 présente une intensité insuffisante pour la transmission du signal de communication à la fiche électrique 500 lorsque celle-ci est enfichée dans la prise électrique 300 ; 400.

Dans le troisième mode de réalisation, les moyens de déplacement 370 comprennent une plaquette métallique 371 solidaire d'un axe de rotation 372 logé dans le boîtier de la prise électrique, à l'arrière du socle 351 du mécanisme d'appareillage 350. Ils comprennent également un moyen de rappel 374 de l'aimant 333 vers une position avancée proche de l'enjoliveur 340.

Ce moyen de rappel 374 est interposé entre le fond du logement 332 et l'aimant 333.

Cette plaquette métallique 371 est adaptée à pivoter entre une première position, représentée sur les figures 11 et 12, dans laquelle elle s'étend à proximité du fond du logement 332 logeant l'aimant 333, parallèlement à ce fond, et une deuxième position, représentée sur les figures 13 et 14, dans laquelle elle est repoussée à distance du logement 332.

L'axe de rotation 372 est à cet effet relié à un moteur électrique alimenté par un troisième circuit électrique indépendant 373 (figures 11 et 13).

Dans sa première position, la plaquette métallique 371 attire l'aimant 333 vers le fond du logement 332 (figures 11 et 12). L'aimant 333 se trouve alors dans sa position désactivée : le champ magnétique émis par l'aimant 333 est alors insuffisant en face avant de l'enjoliveur 340 pour que le signal de communication soit transmis à la fiche électrique enfichée sur la prise électrique.

Dans sa deuxième position, la plaquette métallique 371 n'attire plus l'aimant 333 (figures 13 et 14). Le moyen de rappel 374, ici un ressort de compression, repousse alors l'aimant 333 vers l'avant du mécanisme d'appareillage, à proximité de l'enjoliveur 340. L'aimant 333 se trouve alors dans sa position active : le champ magnétique émis par l'aimant peut alors être détecté par la fiche électrique 500 enfichée dans la prise électrique et le signal de communication est donc transmis à la fiche électrique.

Dans le quatrième mode de réalisation, les moyens de déplacement 470 comprennent un électroaimant 471 logé dans le boîtier de la prise électrique, à l'arrière du socle 451 du mécanisme d'appareillage 450.

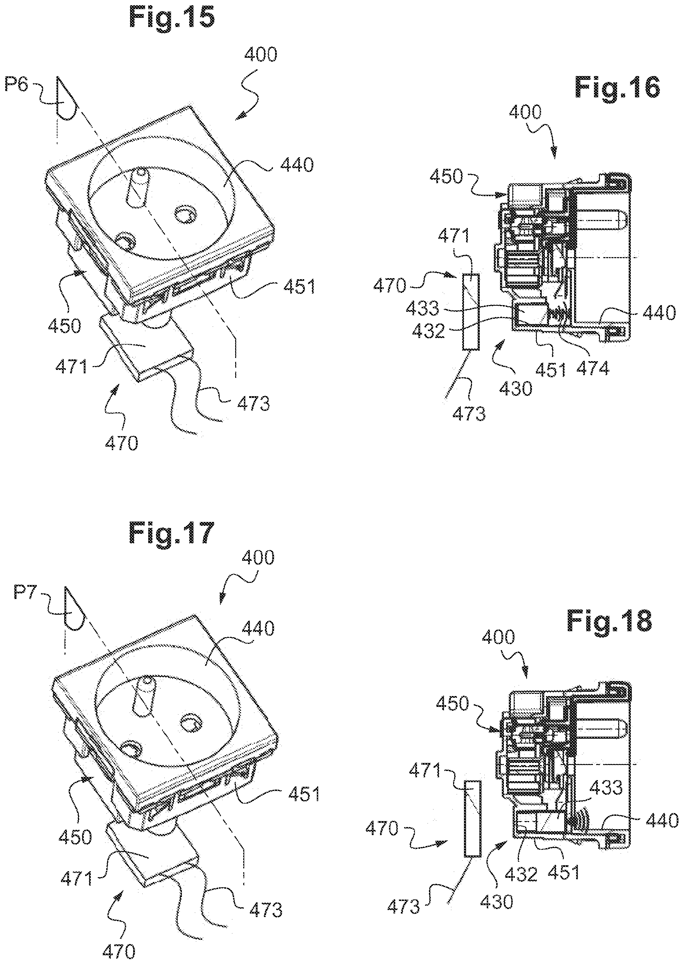

L'électroaimant 471 est alimenté par un quatrième circuit électrique 473 (figures 15 et 16) indépendant distinct de celui relié aux bornes du mécanisme d'appareillage 450 de la prise électrique 400.

Lorsque l'électroaimant 471 est alimenté, il émet un champ magnétique qui repousse l'aimant 433 vers l'avant du logement 432, à l'encontre d'un moyen de rappel 474.

Ce moyen de rappel 474 est un ressort de compression (figure 16) interposé entre une paroi avant du logement 432 et l'aimant 433.

L'aimant 433 se trouve alors dans sa position active (figures 15 et 16) : le champ magnétique émis par l'aimant peut alors être détecté par la fiche électrique 500 enfichée dans la prise électrique et le signal de communication est donc transmis à la fiche électrique

Lorsque l'électroaimant 471 n'est plus alimenté, l'électroaimant 471 n'émet plus de champ magnétique et ne repousse plus l'aimant 433. L'aimant 433 est repoussé vers le fond du logement 432, loin de l'enjoliveur 440, par le ressort de compression 474.

L'aimant 433 se trouve alors dans sa position désactivée (figures 17 et 18) : le champ magnétique émis par l'aimant 433 est alors insuffisant en face avant de l'enjoliveur 440 pour que le signal de communication soit transmis à la fiche électrique 500 enfichée sur la prise électrique 400.

Les figures 1 à 3 montrent la fiche électrique 500 adaptée à coopérer avec la prise électrique 100 ; 200 ; 300 ; 400.

Cette fiche électrique 500 comporte de manière classique un corps 510 isolant qui loge deux broches 521 métalliques de connexion électrique émergeant d'une partie avant 520 du corps suivant des directions parallèles à l'axe longitudinal dudit corps 510.

Ce corps 510 est réalisé en matériau isolant, par exemple par moulage de matière plastique.

Ladite partie avant 520 se présente sous la forme d'un corps cylindrique de révolution autour de l'axe longitudinal dudit corps, fermé à l'avant par une paroi avant à travers laquelle lesdites broches 521 font saillie.

Ladite partie avant 520 comporte également un logement qui débouche dans la paroi avant par une ouverture. Ce logement loge une borne adaptée à recevoir la broche de terre de la prise électrique insérée au travers de ladite ouverture, afin de connecter la fiche électrique 500 à la terre.

Le corps 510 de la fiche électrique 500 est prolongé à l'arrière par un élément arrière 540 (figures 1 et 3) à travers lequel passent les câbles électriques reliant la fiche électrique 500 à un appareil électrique (non représenté).

Les moyens de lecture 530 de la fiche électrique 500 comportent un support et un interrupteur à lames souples monté sur ce support. Ils comportent également le circuit électrique secondaire relié à cet interrupteur à lames souples.

On entend ici par circuit électrique secondaire un circuit électrique de la fiche électrique distinct du circuit électrique principal reliant les broches de la fiche électrique à l'appareil électrique correspondant.

Le circuit électrique secondaire peut être un circuit électrique connecté en entrée et en sortie de l'interrupteur à lames souples à l'appareil électrique, c'est-à-dire ici au véhicule automobile, ou à un détecteur de tension ou de courant de tout type capable de détecter le passage d'un courant à travers l'interrupteur à lames souples.

Il peut également s'agir d'un circuit secondaire connecté d'un côté de l'interrupteur à lames souples à l'appareil électrique et de l'autre à la borne de terre de la fiche électrique.

L'interrupteur à lames souples comprend deux lames de contact qui sont écartées en l'absence d'un champ magnétique et qui viennent au contact l'une de l'autre en présence d'un champ magnétique de sens quelconque. Ces deux lames sont disposées dans un tube de verre rempli d'un gaz inerte les protégeant contre l'oxydation.

Le pouvoir de coupure de cet interrupteur à lames souples correspond au courant maximal pouvant le traverser sans endommager les lames souples et est compris entre 1 milliampère et 4 Ampères. Le temps d'enclenchement de cet interrupteur à lames souples, correspondant au temps mis par les lames pour venir au contact l'une de l'autre en présence d'un champ magnétique, est d'environ 0,5 milliseconde.

L'interrupteur à lames souples s'étend à l'avant de la fiche électrique 500 (figures 1 à 3), à proximité de la partie avant 520 de la fiche électrique.

L'extrémité libre de l'interrupteur à lames souples se trouve ainsi très proche de la paroi avant de la partie avant 520 de la fiche électrique 500.

Lorsque la fiche électrique 500 est insérée dans la prise électrique 100 ; 200 ; 300 ; 400, la face avant de la partie avant 520 de la fiche électrique 500 est plaquée contre le fond du puits de réception de la prise électrique 100 ; 200 ; 300 400, et ainsi l'interrupteur à lames souples est positionné à proximité de l'aimant 133 ; 233 ; 333 ; 433 des moyens d'identification 130 ; 230 ; 330 ; 430 de la prise électrique 100; 200; 300; 400, à condition que ceux-ci se trouvent dans leur position adéquate.

L'interrupteur à lames souples est alors plongé dans le champ magnétique produit par l'aimant 133 ; 233 ; 333 ; 433 de la prise électrique 100 ; 200 ; 300 ; 400 et passe de sa position ouverte, dans laquelle les lames souples sont écartées, à une position fermée dans laquelle les lames souples sont en contact, ce qui autorise la circulation d'un courant électrique dans le circuit électrique secondaire de la fiche électrique 500.

Le passage d'un courant dans ce circuit électrique secondaire (non représenté) permet de transmettre à l'appareil électrique relié à la fiche électrique 500 le signal de contrôle déterminé en fonction du signal électrique délivré par la prise électrique 100 sur laquelle il est branché. Il indique ici que la prise électrique est adaptée de manière certaine à délivrer un signal électrique d'intensité maximale égale à 16 Ampères.

En variante, l'interrupteur à lames souples peut être disposé de manière différente dans la fiche électrique, toujours à proximité de la face avant de la partie avant de la fiche électrique.

On peut en outre envisager de remplacer l'interrupteur à lames souples par un capteur à effet Hall. Ce capteur à effet Hall émet un signal électrique lorsqu'il est plongé dans un champ magnétique. Ce signal électrique est donc émis lorsque le capteur à effet Hall est approché de l'aimant de la prise électrique, ce qui se produit inévitablement lorsque la fiche électrique est insérée dans la prise électrique. Le signal électrique émis par le capteur à effet Hall est alors transmis par le circuit électrique secondaire de la fiche électrique à l'appareil électrique.

Avantageusement, la fiche électrique 500 est tout à fait adaptée à être utilisée avec une prise électrique standard ne comportant aucun moyen d'identification, ou comportant des moyens d'identification non compatibles avec ses moyens de lecture.

Aucun signal de contrôle n'est alors transmis à la fiche électrique, puisque les moyens de lecture de celle-ci ne détectent aucun champ magnétique.

La prise électrique 100 ; 200 ; 300 ; 400 comprise dans un dispositif électrique selon l'invention est également adaptée à recevoir des fiches électriques standards.

La prise électrique 100 ; 200 ; 300 ; 400 appartient de préférence à un dispositif électrique comprenant en outre des moyens de commande 700 adaptés à commander les moyens de coupure 170 ; 270 ; 370 ; 470 de la prise électrique 100; 200; 300; 400 de manière à empêcher la transmission du signal de communication.

Ce dispositif électrique 100 ; 200 ; 300 ; 400 appartient à une installation électrique 1000 dont un exemple est représenté schématiquement sur la figure 4.

Cette installation électrique 1000 comprend notamment ladite source d'alimentation électrique 600. Cette source d'alimentation 600 alimente différents circuits électriques, correspondants à différents appareils électriques.

Elle alimente notamment un premier circuit électrique prioritaire 800, comprenant par exemple, pour une installation domestique, l'éclairage et un ensemble de prises électriques standard. Ceci est représenté par la flèche 601 de la figure 4. L'alimentation de ce premier circuit prioritaire ne peut être interrompue par les moyens de commande 700.

Elle alimente également un deuxième circuit électrique prioritaire 900, comprenant par exemple, pour une installation domestique, le chauffage. Ceci est représenté par les flèches 602, 603 de la figure 4. L'alimentation de ce deuxième circuit prioritaire peut éventuellement être interrompue par les moyens de commande 700.

Elle alimente enfin, comme évoqué précédemment ladite prise électrique 100 ; 200 ; 300 ; 400, d'une part, et les moyens de coupure 170 ; 270 ; 370 ; 470 de la prise électrique, d'autre part.

Ceci est représenté, dans le cas du premier mode de réalisation, par les flèches 602, 604 et 602, 605 de la figure 4.

Les moyens de commande 700 sont adaptés à déterminer la valeur d'une grandeur relative au fonctionnement de l'installation électrique globale et à commander lesdits moyens de coupure de la prise électrique en fonction de cette valeur.

Les moyens de commande 700 peuvent par exemple être programmés pour réaliser une mesure de la valeur d'une grandeur électrique relative au fonctionnement de l'installation électrique globale. Il s'agit par exemple d'une mesure de la consommation électrique instantanée globale de l'installation. Cette mesure est réalisée à intervalle de temps réguliers.

Alternativement, ces moyens de commande 700 peuvent également être adaptés à recevoir une information 610 relative au fonctionnement de l'installation électrique globale, à en déduire ladite valeur de la grandeur relative au fonctionnement de l'installation électrique globale.

Plus précisément, cette information reçue par les moyens de commande est par exemple relative à la consommation électrique globale de ladite installation électrique 1000. Il s'agit plus précisément de la consommation électrique globale instantanée de l'installation électrique 1000.

Les moyens de commande 700 sont alors programmés pour recevoir cette information de consommation électrique globale instantanée périodiquement.

Les moyens de commande 700 sont également programmés pour comparer la consommation électrique globale déduite de ladite valeur mesurée ou de l'information reçue à une valeur seuil de consommation électrique.

La valeur seuil de consommation électrique peut être déterminée en fonction de différents critères. Un premier critère tient compte des caractéristiques physiques et structurelles de l'installation électrique, qui font que la consommation électrique totale de l'installation ne peut dépasser un premier seuil sans faire disjoncter l'installation.

Un deuxième critère tient compte de la tarification de la consommation électrique, qui fait qu'à certaines heures, il est avantageux de ne pas dépasser un deuxième seuil de consommation, au-delà duquel le coût de l'électricité est augmenté.

La valeur seuil de consommation électrique est donc déterminée au cas par cas, pour chaque installation électrique 1000, et en fonction de la tarification de la consommation électrique.

Lorsque la consommation instantanée de l'installation électrique est supérieure à la valeur seuil de consommation de l'installation électrique, les moyens de commande 700 sont programmés pour interrompre ou établir l'alimentation des moyens de coupure 170; 270; 370; 470, de manière à empêcher la transmission du signal de communication à la fiche électrique. Celle-ci tire alors un courant de 8 Ampères et la consommation électrique instantanée de l'installation est réduite.

En contrepartie, la charge de l'appareil électrique relié à la fiche électrique 500 est plus longue.

Lorsque la consommation instantanée de l'installation électrique est inférieure à la valeur seuil de consommation de l'installation électrique, les moyens de commande 700 sont programmés pour interrompre ou établir l'alimentation des moyens de coupure 170; 270; 370; 470, de manière à autoriser la transmission du signal de communication à la fiche électrique 500. Celle-ci tire alors un courant de 14 Ampères. La charge de l'appareil électrique relié à la fiche électrique 500 est alors plus rapide.

Dans le cas du premier mode de réalisation, les moyens de coupure 170 sont constitués directement par le circuit électrique secondaire 172 alimentant l'électroaimant 133.

Les moyens de commande 700 comprennent ici un appareil électrique du type délesteur. Ce délesteur mesure périodiquement le courant électrique qui le traverse. Il peut également recevoir des informations 610 relatives au fonctionnement de l'installation électrique globale, par exemple une information indiquant le passage d'une tarification de jour à une tarification de nuit.

C'est le cas représenté sur la figure 4.

Lorsque la valeur seuil de consommation électrique de l'installation électrique est dépassée, le délesteur coupe l'alimentation de l'électroaimant 133.

Si la consommation électrique instantanée reste supérieure à ladite valeur seuil de consommation, le délesteur est programmé pour interrompre l'alimentation de la prise électrique 100. La charge de l'appareil électrique est donc interrompue.

Enfin, si la consommation électrique instantanée reste supérieure à ladite valeur seuil de consommation, le délesteur est programmé pour interrompre l'alimentation du deuxième circuit prioritaire 900.

Dans le cas du deuxième mode de réalisation, le dispositif de commande est un système de gestion d'énergie.

Lorsque la valeur seuil de consommation électrique de l'installation électrique est dépassée, ce système de gestion d'énergie établit l'alimentation du moteur électrique relié à l'axe de rotation 272 de la plaquette 271 de mumétal de manière à positionner celle-ci dans sa position d'interaction dans laquelle elle dévie le champ magnétique émis par l'aimant 233.

Lorsque la valeur seuil de consommation électrique de l'installation électrique est inférieure à la consommation électrique globale instantanée, le système de gestion d'énergie interrompt l'alimentation du moteur électrique relié à l'axe de rotation 272 de la plaquette 271 de manière à positionner celle-ci dans sa position de retrait dans laquelle elle permet le passage du champ magnétique émis par l'aimant 233.

Dans le cas du troisième mode de réalisation, le dispositif de commande est un système de gestion d'énergie.

Lorsque la valeur seuil de consommation électrique de l'installation électrique est dépassée, ce système de gestion d'énergie établit l'alimentation du moteur électrique relié à l'axe de rotation 372 de la plaquette métallique 371 de manière à positionner celle-ci dans sa première position dans laquelle elle attire l'aimant 333 dans sa position désactivée.

Lorsque la valeur seuil de consommation électrique de l'installation électrique est inférieure à la consommation électrique globale instantanée, le système de gestion d'énergie interrompt l'alimentation du moteur électrique relié à l'axe de rotation 372 de la plaquette 371 de manière à positionner celle-ci dans sa deuxième position, dans laquelle l'aimant 333 est repoussé vers sa position active.

Dans le cas du quatrième mode de réalisation, le dispositif de commande est un délesteur.

Lorsque la valeur seuil de consommation électrique de l'installation électrique est dépassée, ce délesteur interrompt l'alimentation de l'électroaimant 471. Celui-ci n'émet aucun champ magnétique et l'aimant 433 se place dans sa position désactivée.

Lorsque la valeur seuil de consommation électrique de l'installation électrique est inférieure à la consommation électrique globale instantanée, le délesteur établit l'alimentation de l'électroaimant 471. Celui-ci émet un champ magnétique qui repousse l'aimant 433 dans sa position active.

Grâce au dispositif électrique selon l'invention, il est ainsi possible de commander la transmission ou non du signal de commande émis par la prise électrique à la fiche électrique branchée sur elle, ce qui permet de faire varier les conditions de charge de l'appareil électrique relié à la fiche électrique en fonction des conditions de fonctionnement de l'installation électrique à laquelle appartient le dispositif électrique, notamment en fonction de la consommation électrique et de la tarification de l'électricité.

La charge de l'appareil électrique est ainsi plus sûre et plus économique.

## Revendications

1. Dispositif électrique comportant une prise électrique (100 ; 200 ; 300 ; 400) adaptée à délivrer un signal électrique qui présente une intensité maximale déterminée, la prise électrique comportant un aimant (133 ; 233 ; 333 ; 433) conçu pour générer un champ magnétique destiné à une fiche électrique (500), la prise électrique comportant des moyens de coupure (170; 270; 370; 470) pour empêcher la transmission dudit champ magnétique à la fiche électrique (500),
**caractérisé en ce que** le champ magnétique est représentatif de ladite intensité maximale dudit signal électrique et **en ce que** le dispositif électrique comporte des moyens de commande (700) adaptés à déterminer une valeur d'une consommation électrique globale instantanée d'une installation électrique (1000) comprenant ledit dispositif électrique, et à commander les moyens de coupure (170; 270; 370; 470) de la prise électrique en fonction de cette valeur de manière à empêcher la transmission dudit champ magnétique.

2. Dispositif électrique selon la revendication 1, dans laquelle ledit aimant (133; 233; 333; 433) est un aimant permanent (233; 333; 433) ou un électroaimant (133).

3. Dispositif électrique selon la revendication 1 ou 2, dans laquelle ledit aimant (133 ; 233 ; 333 ; 433) est logé à l'intérieur d'un boîtier (160 ; 360) de la prise électrique (100 ; 200 ; 300 ; 400), derrière une plaque enjoliveur (140 ; 240 ; 340 ; 440) fermant à l'avant ce boîtier.

4. Dispositif électrique selon l'une des revendications 1 à 3, dans laquelle ledit aimant est un électroaimant (133) et lesdits moyens de coupure (170) comprennent des moyens d'interruption du courant électrique circulant dans ledit électroaimant (133).

5. Dispositif électrique selon la revendication 3, dans laquelle lesdits moyens de coupure (370 ; 470) comprennent des moyens de déplacement (370 ; 470) dudit aimant (333 ; 433), depuis une position active dans laquelle le champ magnétique émis par cet aimant (333 ; 433) se propage au moins jusqu'à la face avant de ladite plaque enjoliveur (340 ; 440), vers une position désactivée, dans laquelle ledit champ magnétique en face avant de la plaque enjoliveur (340 ; 440) présente une intensité insuffisante pour la transmission dudit champ magnétique à la fiche électrique (500) enfichée dans la prise électrique.

6. Dispositif électrique selon la revendication 3, dans laquelle lesdits moyens de coupure (270) comprennent des moyens de déviation (271) du champ magnétique émis par ledit aimant (233), adaptés à être déplacés depuis une position de retrait dans laquelle le champ magnétique émis par l'aimant (233) se propage au moins jusqu'à la face avant de ladite plaque enjoliveur (240), vers une position d'interaction, dans laquelle ledit champ magnétique est dévié par lesdits moyens de déviation (271) de manière à présenter, en face avant de la plaque enjoliveur (240), une intensité insuffisante pour la transmission dudit champ magnétique à la fiche électrique (500) enfichée dans la prise.

7. Ensemble électrique comportant un dispositif électrique selon l'une des revendications 1 à 6 et une fiche électrique (500) complémentaire comprenant des moyens de lecture (530) adaptés à recevoir ledit champ magnétique.

## Patentansprüche

1. Elektrische Vorrichtung mit einer elektrischen Steckdose (100; 200; 300; 400), die dazu ausgelegt ist, ein elektrisches Signal abzugeben, das eine bestimmte maximale Stromstärke darstellt, wobei die elektrische Steckdose einen Magneten (133; 233; 333; 433) aufweist, der dafür konzipiert ist, ein magnetisches Feld zu erzeugen, das für einen elektrischen Stecker (500) bestimmt ist, wobei die elektrische Steckdose Trennmittel (170; 270; 370; 470) aufweist, um die Übertragung des Magnetfelds auf den elektrischen Stecker (500) zu verhindern, **dadurch gekennzeichnet, daß** das Magnetfeld für den maximalen Strom des elektrischen Signals kennzeichnend ist und daß die elektrische Vorrichtung Steuermittel (700) aufweist, die dazu ausgelegt sind, einen Wert eines momentanen globalen elektrischen Verbrauchs einer elektrischen Installation (1000), die die elektrische Vorrichtung aufweist, zu bestimmen und die Trennmittel (170; 270; 370; 470) der elektrischen Steckdose in Abhängigkeit von diesem Wert zu steuern, um die Übertragung des Magnetfelds zu verhindern.

2. Elektrische Vorrichtung gemäß Anspruch 1, bei der der Magnet (133; 233; 333; 433) ein Permanentmagnet (233; 333; 433) oder ein Elektromagnet (133) ist.

3. Elektrische Vorrichtung gemäß Anspruch 1 oder 2, bei der der Magnet (133; 233; 333; 433) im Inneren eines Gehäuses (160; 360) der elektrischen Steckdose (100; 200; 300; 400) hinter einer die Vorderseite des Gehäuses abschließenden Abdeckplatte (140; 240; 340; 440) angeordnet ist.

4. Elektrische Vorrichtung gemäß einem der Ansprüche 1 bis 3, bei der der Magnet ein Elektromagnet (133) ist und die Trennmittel (170) Mittel zum Unterbrechen des im Elektromagneten (133) fließenden Stroms sind.

5. Elektrische Vorrichtung gemäß Anspruch 3, bei der die Trennmittel (370; 470) Mittel zum Verlagern (370; 470) des Magneten (333; 433) von einer aktiven Stellung, in der sich das von diesem Magneten (333; 433) abgestrahlte Magnetfeld wenigstens bis zur Vorderseite der Abdeckplatte (340; 440) ausbreitet, in eine deaktivierte Stellung, in der das Magnetfeld auf der Vorderseite der Abdeckplatte (340; 440) eine für eine Übertragung des Magnetfelds an den in die elektrische Steckdose eingesteckten elektrischen Stecker (500) eine unzureichende Stärke aufweist, aufweisen.

6. Elektrische Vorrichtung gemäß Anspruch 3, bei der die Trennmittel (270) Mittel zum Ablenken (271) des durch den Magneten (233) abgestrahlten Magnetfelds aufweisen, die dazu ausgelegt sind, von einer zurückgezogenen Stellung, bei der sich das von dem Magneten (233) abgestrahlte Magnetfeld wenigstens bis zur Vorderseite der Abdeckplatte (240) ausbreitet, in eine Wechselwirkungsstellung verlagert zu werden, bei der das Magnetfeld durch die Ablenkmittel (271) abgelenkt wird, um auf der Vorderseite der Abdeckplatte (240) eine für eine Übertragung des Magnetfelds an den in die elektrische Steckdose eingesteckten elektrischen Stecker (500) eine unzureichende Stärke aufzuweisen.

7. Elektrische Baugruppe, die eine elektrische Vorrichtung gemäß einem der Ansprüche 1 bis 6 und einen komplementären elektrischen Stecker (500), der zum Empfangen des Magnetfelds ausgelegte Lesemittel (530) aufweist, aufweist.

## Claims

1. An electrical device comprising a socket outlet (100; 200; 300; 400) that is adapted to deliver an electrical signal that presents a determined maximum current, the socket outlet including a magnet (133; 233; 333; 433) that is designed to generate a magnetic field intended for an electric plug (500), the socket outlet including cutout means (170; 270; 370; 470) for preventing said magnetic field from being transmitted to the electric plug (500);
said electrical device being **characterized in that** the magnetic field is representative of said maximum current of said electrical signal, and **in that** the electrical device includes control means (700) that are adapted to determine a value of an instantaneous overall electricity consumption of an electrical installation (1000) including said electrical device, and to control the cutout means (170; 270; 370; 470) of the socket outlet as a function of said value so as to prevent said magnetic field from being transmitted.

2. An electrical device according to claim 1, wherein said magnet (133; 233; 333; 433) is a permanent magnet (233; 333; 433) or an electromagnet (133).

3. An electrical device according to claim 1 or claim 2, wherein said magnet (133; 233; 333; 433) is housed inside a housing (160; 360) of the socket outlet (100; 200; 300; 400), behind a trim plate (140; 240; 340; 440) that closes the housing at the front.

4. An electrical device according to any one of claims 1 to 3, wherein said magnet is an electromagnet (133) and said cutout means (170) comprise switch means for interrupting the electric current flowing in said electromagnet (133).

5. An electrical device according to claim 3, wherein said cutout means (370; 470) include mover means (370; 470) for moving said magnet (333; 433) from an active position in which the magnetic field emitted by the magnet (333; 433) propagates at least as far as the front face of said trim plate (340; 440), to a deactivated position in which said magnetic field at the front face of the trim plate (340; 440) presents strength that is insufficient to transmit said magnetic field to the electric plug (500) that is plugged into the socket outlet.

6. An electrical device according to claim 3, wherein said cutout means (270) includes deflection means (271) for deflecting the magnetic field emitted by said magnet (233), adapted to be moved from a retracted position in which the magnetic field emitted by the magnet (233) propagates as far as the front face of said trim plate (240), to an interaction position in which said magnetic field is deflected by said deflection means (271) so as to present, at the front face of the trim plate (240), strength that is insufficient to transmit said magnetic field to the electric plug (500) that is plugged into the socket outlet.

7. An electrical assembly comprising an electrical device according to any one of claims 1 to 6, and a complementary electric plug (500) that includes reader means (530) that are adapted to receive said magnetic field.
